# EUROPEAN PATENT APPLICATION

(11) **EP 1 308 086 A2**
(43) Date of publication of application: **07.05.2003**
(21) Application number: 02445131.2
(22) Date of filing: 11.10.2002
(51) Int. Cl.: A01J 5/017, A01J 7/04

(54) **A method for performing milking operations and performing after-treatment operations**

(30) Priority: 31.10.2001 SE 0103614
(71) Applicant: DeLaval Holding AB, 147 21 Tumba (SE)
(72) Inventor: Björk, Anders, 145 90 Norsborg (SE); Hallström, Anders, 136 66 Haninge (SE)
(74) Representative: Janson, Ronny

(57) **Abstract**

A method for milking and after-treating an animal by using an automatic milking system comprising means for locating the teats of said animal, means for milking said animal and means for performing an after-treatment of said animal, characterised in that the method comprises the step of locating the teats of an animal before said after-treatment.

## Description

### Field of the invention

The invention relates to a method for milking and after-treating an animal of the kind apparent from the preamble of claim 1.

The present invention relates to a method for minimising the consumption of chemicals used in connection with after-treatment operations of animal's teats after milking operations.

### Background of the invention

It is important to treat the teats of an animal after a milking operation, in order to apply skin conditioner on the same and prevent sore, dry and/or chaffed teats. Sore teats make the milking operation more difficult to accomplish the next time, as is readily recognised. During the early part of summer this after-treatment operation may also include spraying sun block on the teats and thereby preventing sunburn, again in order to prevent sore teats. Another important after-treatment operation is the spraying of disinfectant on the teats and the tips of the teats, to prevent penetration of bacteria, virus or fungi into the teat canals.

Today these after-treatment operations are done blindly using an expected position of the teats and parameters selected based on values from earlier locating procedures. In these after-treatment operations, the chemicals (disinfectant or skin conditioner, for example) are often used in excess to be sure that the teats are covered therewith, which leads to an unnecessarily large amount of chemicals being used. Another disadvantage with the approach of using a surplus of after-treatment chemicals, is that the preparation (lotion or liquid or the like) is sprayed not only on the teat but also onto the udder, where it runs down along the teats and brings with it contamination that may exist on the udder, which may cause bacteria, virus or the like to enter the teat canals and cause infections. This waste of chemicals gives an uncalled for cost, besides the environmental influence and the increased risk of infections in the animal's teats.

Published patent application WO 99/46978 addresses the problem of chemical waste described above. The disinfectant spray is sprayed on the teats of an animal by means of spray nozzles arranged on the outside of each teat cup, used when milking the animal. Each spray nozzle is adapted to spray disinfectant liquid onto the teat during removal of the teat cup from the teat when the milking operation is terminated. In this document however, the state of the art method for performing the after-treatment operation is used. That is, using an expected position of the teats and parameters selected based on values from earlier locating procedures. Thus, this method still performs the spraying blindly since the spraying is performed during the removal of the teat cup, after the milking operation is terminated.

### Summary of the invention

An object of the present invention is to enable minimisation of the chemicals used in an after-treatment operation, by providing a method for locating the teats of an animal after a milking operation and before an after-treatment operation.

This object is achieved by a method as defined in the characterising portion of claim 1.

The invention is based on the realisation that the positions of the teats of an animal, after the milking operation has been performed, are different from the positions before the milking operation.

One contribution to this difference in positions is that the anatomy of the udder before the milking operation is not the same as the anatomy of the udder after the milking operation. Further, the anatomy of the udder changes during the course of a lactation. Further yet, the cow may move back and forth during a milking operation, thus changing its position and thereby the position of the udder and the teats.

The present invention thus comprises a method using this realisation regarding the positions of the teats, by including a locating step after milking operations of an animal and before after-treatment operations.

### Brief description of the drawings

Figs. 1a and 1b show the udder of an animal before and after a milking operation has been performed.

Fig. 2 shows the problem related to spraying of teats according to prior art.

Fig. 3 shows one embodiment of a teat-locating device to be used in the method of the present invention.

### Detailed description of preferred embodiments

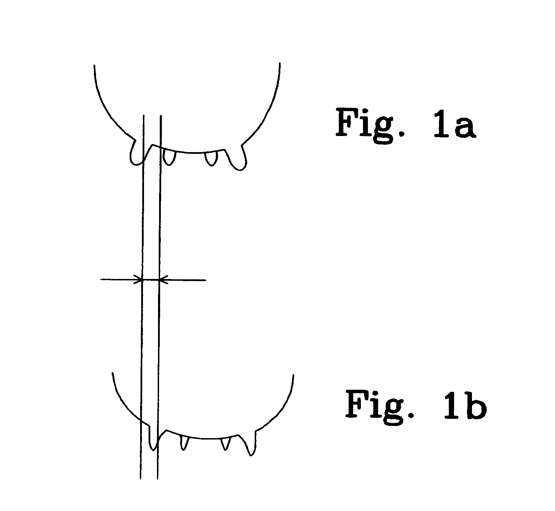

Figs. 1a and 1b illustrate the realisation that the positions of the teats of an animal after a milking operation differ from the positions before the milking operation. The anatomy of the udder of an animal changes from before the milking operation and after the same. Besides this, the anatomy of an udder changes during a lactation. That is, when an animal is at the beginning of a lactation cycle, the anatomy of the udder differs significantly from the anatomy of the udder of the same animal when it is at the end of a lactation cycle. Finally, an animal may of course move when it is in a milking parlour or the like, thus changing its position, and thereby the positions of the teats, rather much. All the resulting varying teat positions are considered in the method according to the present invention.

With reference to figs. 1a and 1b, the present problem of today is readily understood. If the after-treatment operation is performed under the assumption of the teats being located after a milking operation as they are before the milking operation, a large part of the chemicals are wasted.

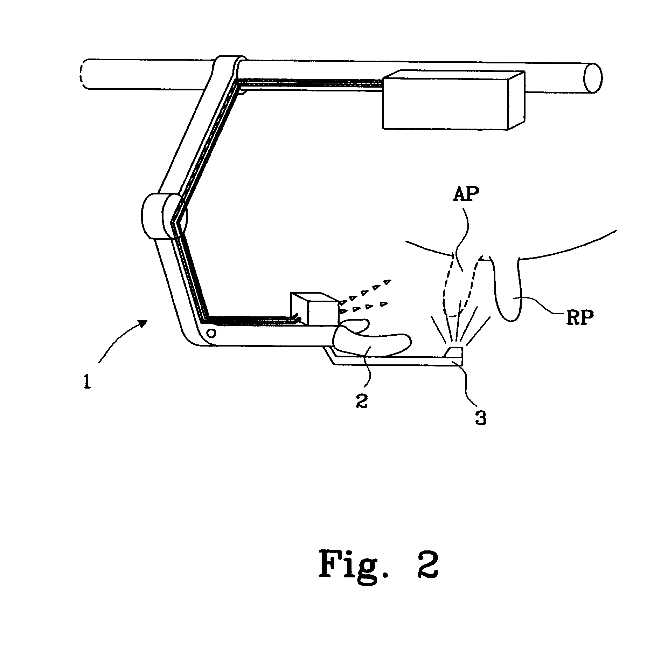

Fig. 2 illustrates this problem in connection with prior art methods for after-treatment operations of animals. If the spraying of the teats is done under the assumption that the positions of the teats are the same after a milking operation as they are before the milking operation, the spraying is very inefficient. In Fig. 2 part of a robot arm 1 of an automatic milking system is shown, comprising gripping means 2. The robot arm 1 can be used for automatically connecting a teat cup to a respective teat. The gripping means 2 may include a spraying nozzle 3 for spraying after-treatment chemicals. This spraying nozzle 3 is adjusted so as to spray at the assumed position (AP) of a teat. As can be seen in Fig. 2, and as was explained above, this leads to an unnecessary waste of chemicals, since the real position (RP) can be quite different from the assumed position (AP) of the teats, which is based on parameters from earlier locating procedures. Additionally, these parameters are from locating procedures performed prior to a milking operation, not after the same.

Thus, in the method according to the present invention the teats are located a second time after the milking has been completed.

An automatic milking system uses a teat-locating device to locate the teats of an animal in order for a milking robot arm of an automatic milking system to be able to attach the teat cups to the teats, after which the milking operation is performed. The milking robot arm may locate one teat at a time and attach a teat cup to the located teat. That is, the milking robot arm fetches a first teat cup, locates a first teat and attaches it to the firstly located teat. Then the milking robot arm fetches a second teat cup, locates a second teat and attaches the teat cup to it, and so on until all four teats are attached to teat cups. An alternative embodiment is to locate all the teats and have a milking robot arm, provided with means to hold four teat cups, attaching the teat cups to the located teats concurrently. Alternatively the teat cups are attached essentially concurrently, that is, the milking robot arm locates a teat and attaches a teat cup to it, and then locates the next teat and attaches a teat cup to this teat, and so on, but without the milking robot arm needing to fetch a new teat cup between the locating procedures. This locating procedure is today done before the milking operation only, and thus, as mentioned above, the after-treatment operation becomes inefficient. In the method according to the present invention, a locating procedure is performed after the milking operation has been completed as well, since it is realised that the positions of the teats are not the same after the milking operation as they were before.

In yet another embodiment, not all teats need to be milked and after-treated, respectively, simultaneously. For example, the two foremost teats may be located a second time and after-treated before the two rearmost, that is, possibly while said rearmost teats are still being milked. The second location step may thus be performed before the whole milking operation has been completed.

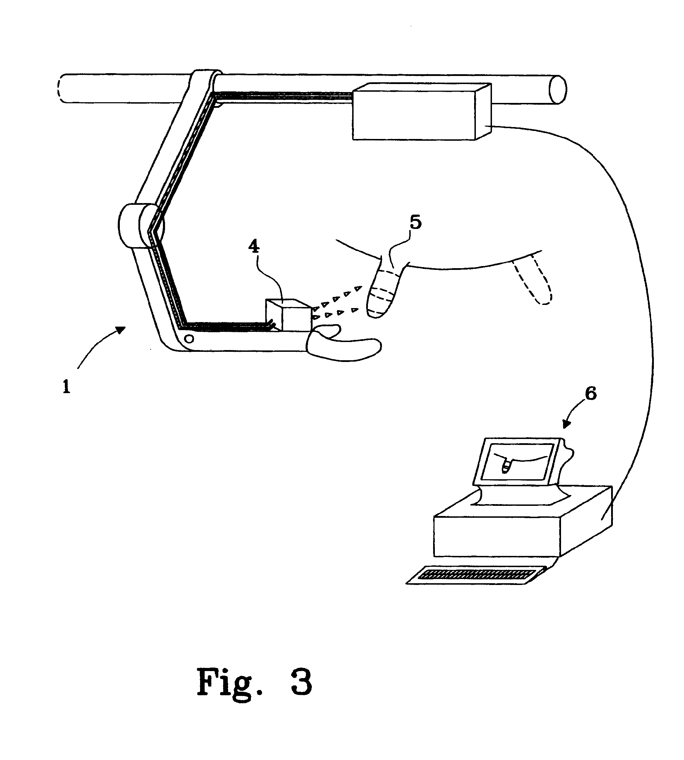

The locating of the teats can be done by means of any known locating procedure. One preferred locating procedure is accomplished by the use of a camera, as shown in fig. 3. Reference is also made to the Swedish patent application 9904010-7 filed 4 November 1999, by the same applicant, regarding a teat-locating device, which will now be described very briefly. A sensor unit 4, placed on a robot arm 1, includes a camera and is used to locate the teats 5. The sensor unit 4 produces information of a teat 5 being illuminated by an electromagnetic radiation (EMR) source, for example one or more lasers, placed at a proper emitting location. Control means 6, for example a computer including means for image processing, can hereby locate the illuminated teat and thus enable the after-treatment spraying in an efficient way, without unnecessarily wasting chemicals.

The anatomy of an udder of an animal changes during the course of a lactation, as mentioned above, and the anatomy also changes during lactation cycles, but in both cases it changes rather slowly. The parameters determined regarding the udder's anatomy and the positions of the teats do consequently not change that much from day to day. However, what is needed at every milking operation occasion is the animal's current position in a milking parlour, which position may be determined by means of one or more animal positioning sensors. Thus, if using a camera for locating the animal's teats, as described above, together with at least one sensor sensing the animal's position in the milking parlour, information of the positions of the teats can be reused. That is, once the positions of the teats after a milking operation have been determined, this determination can be used for about 7-15 days, before a new locating procedure using the camera is needed. The information about the location of the animal's teats after a milking operation can be stored in a memory of the automatic milking system. Thus, since the anatomy of an udder of an animal changes rather slowly, the same information can be used for a longer period of time, before the next locating procedure, using for example a camera, is performed. This is of course possible only under the presumption that one or more sensors sensing the animal's position in the milking parlour are used at every milking operation occasion, or some other means for determining the animal's position in the milking parlour.

Hence, if using the locating procedure described above, including a camera and one or more animal positioning sensors, the camera and the image processing means need not be used on a daily basis, but only the one or more animal positioning sensors and the stored information about the positions of the animal's teats. This infrequent use of the camera in locating procedures means that time is saved during the after-treatment operations when the camera is not put to use, without affecting the performance of the system, while still giving a greatly improved precision of after-treatment operations.

In an alternative embodiment the camera may be used for determining the positions of an animal's teats without a separate sensor for sensing the position of the animal in a milking parlour. In this embodiment the camera is used at each after-treatment operation occasion, for locating the teats of an animal.

It should be appreciated that the locating procedure used could be another than the one used in the described embodiment. For example, ultrasonic waves could be used. Other modifications and alterations are also apparent and are to be included within the scope of the appended claims.

Thus, while the invention has been described with reference to particular embodiments, it is to be understood that this invention is not limited to the particular forms illustrated. Modifications and alterations obvious to a person skilled in the art are to be included within the scope of the appended claims.

## Claims

1. A method for performing milking operations and after-treatment operations of an animal by using an automatic milking system comprising means for locating at least one teat of said animal, means for milking said animal and means for performing an after-treatment operation of said animal, said method comprising the steps of locating the at least one teat a first time by said locating means, performing a milking operation using said milking means and performing at least one after-treatment operation using said after-treatment means, **characterised in that** the method comprises an additional step of locating the at least one teat of the animal a second time, said additional step being performed prior to said step of performing an after-treatment operation.

2. Method as claimed in claim 1, wherein the steps of locating the at least one teat of the animal comprise the use of a video camera and control means including image processing means.

3. Method as claimed in claims 1, wherein the steps of locating the at least one teat of the animal comprise the use of ultrasonic waves.

4. Method as claimed in any of claims 1-3, wherein information about the location of the at least one teat after said milking operation, acquired in said additional step of locating the at least one teat before the after-treatment operation, is stored in a memory comprised in said automatic milking system.

5. Method as claimed in claim 4, wherein said additional step of locating the at least one teat of the animal is performed less than at every milking occasion using said stored information.

6. Method as claimed in claim 5, wherein said automatic milking system further comprises at least one sensor for sensing the position of the animal and said step of locating the at least one teat of the animal a second time comprises using the stored information and the sensed position of the animal.

7. Method as claimed in claim 2, wherein said camera and image processing means are used at regular intervals.

8. Method as claimed in any of the preceding claims, wherein said milking operation includes attaching one teat cup at a time to a corresponding teat.

9. Method as claimed in any of claims 1-7, wherein said milking operation includes attaching teat cups concurrently to more than one teat of the animal.

10. Method as claimed in any of the preceding claims, wherein said additional step of locating the at least one teat a second time provides for a lesser consumption of after-treatment chemicals.

11. Method as claimed in any of the proceeding claims, wherein said additional step of locating the at least one teat a second time minimises the consumption of after-treatment chemicals.

12. Method as claimed in any of the preceding claims, wherein said second location step generally result in different location information for the respective teats than said first step of location due to a different anatomy of the udder, and thereby different positions of the teats, before and after the milking operation.

13. Method as claimed in any of the preceding claims, wherein said additional step of locating the at least one teat a second time enables said after-treatment operation to be performed with accuracy and the after-treatment chemical being applied only on intended areas.
